## Europäisches Patentamt
## European Patent Office
## Office européen des brevets

(19)

(11) Veröffentlichungsnummer: **0 129 649**
**B1**

(12) # EUROPÄISCHE PATENTSCHRIFT

(45) Veröffentlichungstag der Patentschrift:
24.09.86

(21) Anmeldenummer: **84103661.9**

(22) Anmeldetag: **03.04.84**

(51) Int. Cl.⁴: **A 01 F 29/06,** A 01 F 29/20,
B 26 D 7/26

(54) Häckselanordnung.

(30) Priorität: 24.05.83 DE 3318752

(43) Veröffentlichungstag der Anmeldung:
02.01.85 Patentblatt 85/1

(45) Bekanntmachung des Hinweises auf die Patenterteilung:
24.09.86 Patentblatt 86/39

(84) Benannte Vertragsstaaten:
AT BE FR GB NL

(56) Entgegenhaltungen:
FR-A-2 071 818
FR-A-2 466 185
GB-A-2 113 964

(73) Patentinhaber: Klöckner- Humboldt- Deutz AG
Zweigniederlassung Fahr, D-7702 Gottmadingen
(DE)

(72) Erfinder: Binder, Berthold, Ethenbühlstrasse 1,
D-7702 Gottmadingen (DE)
Erfinder: Pürrer, Josef, Inneres Flassental 13,
D-7702 Gottmadingen (DE)

(74) Vertreter: Haft, Berngruber, Czybulka, Hans-
Sachs- Strasse 5, D-8000 München 5 (DE)

LIBER, STOCKHOLM 1986

**Beschreibung**

Die vorliegende Erfindung betrifft eine Häckselanordnung für Häckselmaschinen, insbesondere Trommelhäcksler nach dem Oberbegriff des Anspruchs 1.

Bei derartigen Häckselanordnungen wird üblicherweise ein Futterstrom über Zuführwalzen der rotierenden Trommelrosette zugeführt, die mit meist schräg angeordneten Schneidmessern versehen ist, welche mit der in der Häckselanordnung feststehenden Gegenschneide das zugeführte Futter in kleine Stücke häckselt. Um eine gute Häckselleistung zu ermöglichen, ist es erforderlich, daß der Spalt zwischen den Schneidmessern und der Gegenschneide einen konstanten Wert aufweist, der üblicher kleiner als 1 mm ist; aufgrund der auftretenden Abnützung der Messer und deren Verkürzung aufgrund des Nachschleifens vergrößert sich jedoch während des Einsatzes einer derartigen Häckselanordnung der Spalt zwischen Schneidmessern und Gegenschneiden, so daß es erforderlich ist, die Gegenschneide ab und zu nachzustellen.

Aus der DE-A- 29 26 538 ist eine einstellbare Halterung für eine mit einer Messertrommel eines Häckslers zusammenwirkende Gegenschneide bekannt geworden, die ein die Gegenschneide in Förderrichtung auf die Messertrommel zu verschiebendes und über eine Verstelleinrichtung betätigbares Schubglied aufweist, das zusammen mit der Gegenschneide zwischen Klemmteilen verspannbar ist, deren Wirkrichtung senkrecht zur Verstelleinrichtung der Gegenschneide ausgerichtet ist und wobei zwischen der Verstelleinrichtung und dem Schubglied ein um eine zur Länge der Gegenschneide parallele Achse schwenkbar gelagerter Hebel vorgesehen ist, an dem einerseits die Verstelleinrichtung angreift und der andererseits auf das Schubglied in Verstellrichtung verschiebend einwirkt, wobei das Schubglied und die Gegenschneide während der Verstellung gemeinsam zwischen den Klemmteilen eingespannt bleiben, deren Klemmkraft kleiner als die Schubkraft des Schubgliedes eingestellt ist.

Bei dieser bekannten Verstellanordnung sind also die Klemmeinrichtung und die Verstelleinrichtung voneinander unabhängig und müssen demzufolge getrennt betätigt werden. Aufgrund des dort verwendeten Verstellhebels ist ferner eine die Kraft multiplizierende Übersetzungseinrichtung erforderlich, so daß der Gesamtaufwand hoch ist.

Ferner ist aus dem DE-U- 71 43 407 eine einstellbare Halterung für die Gegenschneide einer Häckselanordnung bekannt, mit einem die Gegenschneide in Richtung zur Messertrommel verschiebenden Schubglied in Form eines konzentrischen Bundes, das über eine Mutter verstellt werden kann, wobei das Schubglied und die Gegenschneide über eine weitere Schraube verspannbar sind die in den konzentrischen Bund durchdie Mutter verspannbar ist. Um nun diese Schrauben zum Nachstellen zu lösen, sind Teile des Maschinengehäuses zu entfernen, wobei ferner nach dem Lösen der Schrauben keine Klemmwirkung mehr für die Gegenschneide besteht.

Aus der FR-A-24 66 185 ist eine Einstellvorrichtung für den Schneidbalken einer Häckselanordnung bekannt, bei der zur Einstellung der Gegenschneide mehrere Einstellmaßnahmen erforderlich sind. Mit Hilfe von vorhandenen Stellschrauben lassen sich zwei Keile im wesentlichen in vertikaler Richtung verschieben, wobei der Abstand der Gegenschneide mit Hilfe von Stellschrauben variiert werden kann. Weitere Stellschrauben dienen der Lagesicherung der Gegenschneide, so daß sehr komplizierte Einstellvorgänge erforderlich sind.

Für die optimale Funktion der Häckselanordnungen ist also das exakte Einhalten des Abstands zwischen dem Messer und Gegenschneide erforderlich. Da bei jedem Nachschleifen der Messer ihr Rotationskreis kleiner wird, ist demzufolge die Gegensechneide so lange nachzustellen, bis der Schneidspalt wieder die richtige Breite aufweist. Wird wie es meist der Fall ist, die Gegenschneidebefestigung so gestaltet, daß pro Seite eine Einstellschraube und eine Befestigungsschraube vorhanden ist, so müssen diese mit sehr hohem Drehmoment angezogen werden, aufgrund der hohen pulsierenden Schnittkräfte und der hohen Belastung der Befestigungsschrauben. Feiner wird dies bei den herkömmlichen Befestigungsanordnungen durch die schlechte Zugänglichkeit wegen der die Befestigungsstelle umgebenden Fahrwerks- und Antriebsteile erschwert.

Obendrein ist ein exaktes Messen des Schneidspaltes immer erst dann möglich, wenn die Gegenschneide nach dem Festziehen sämtlicher Defestigungsschrauben ihre endgültige Lage erreicht hat, so daß ein mehrmaliges Wiederholen des umständlichen Einstellvorgangs erforderlich ist.

Aufgabe der vorliegenden Erfindung ist es, eine Häckselanordnung mit einer einstellbar gehaltenen Gegenschneide zu schaffen, bei der die oben genannten Nachteile vermieden sind, die also einfach und genau, feinfühlig und schnell nachstellbar ist.

Ausgehend von einer Häckselanordnung für Häckselmaschinen der eingangs näher genannten Art, wird zur Lösung dieser Aufgabe vorgeschlagen, daß jeder Bügel als Spannbügel ausgebildet ist, der die Gegenschneide unter der Einwirkung von jeden seiner Schenkel durchsetzenden mit Spannmuttern zusammenwirkenden Spannschrauben gegen die waagrechte Oberfläche des Amboß drückt, daß die beiden Schenkel des Spannbügels durch Gelenkstücke mit parallel zur Längsrichtung der Gegenschneide ausgerichteten Schwenkachsen verlängert sind und daß die dem Amboß zugewandte Innenseiten der Gelenkstücke konvex sind und an den Seitenwänden des Amboß nur an einer Stelle anliegen, so daß durch vertikales Verschieben nur eines Schenkels des Spannbügels ein entsprechendes im wesentlichen horizontales Verschieben der Gegenschneide erfolgt.

Vorteilhafterweise sind die Spannschrauben von unten mittig in das Gelenkstück jedes der beiden Schenkel jedes Spannbügels eingesetzt und die Spannmuttern mittig von oben eingesetzt und so weit nach oben verlängert, daß sie durch einen Stückschlüssel von oben zugänglich sind.

Mit der Erfindung wird der Vorteil erzielt, daß das Einstellen des Gegenmessers wesentlich erleichtert ist. Mit einem verlängerten Steckschlüssel können die Spannschrauben leicht von oben nachgestellt werden, ohne daß Teile der Verkleidung der Häckselmaschine abgenommen werden müssen. Durch unterschiedliches Anziehen der Spannschrauben und der Spannmuttern stellen sich die Spannbügel etwas schräg und verschieben demzufolge die Gegenschneide in im wesentlichen horizontaler Richtung. Das Nachstellen der Gegenschneide erfolgt in besonders einfacher Weise dadurch, daß lediglich jene Spannschraube, die in der gewünschten Verstellrichtung liegt, um ein gewisses Maß gelöst und die zweite Schraube um dasselbe Maß weiter angezogen wird. Durch die Aufteilung der Spannkraft auf zwei Schrauben wird das Anzugsmoment auf eine leicht beherrschbare Größe reduziert.

Im folgenden wird die Erfindung anhand der Zeichnung näher erläutert, in der ein vorteilhaftes Ausführungs beispiel dargestellt ist; es zeigen:

Figur 1 einen Schnitt durch eine Häckselanordnung in Richtung der Gegenschneide und

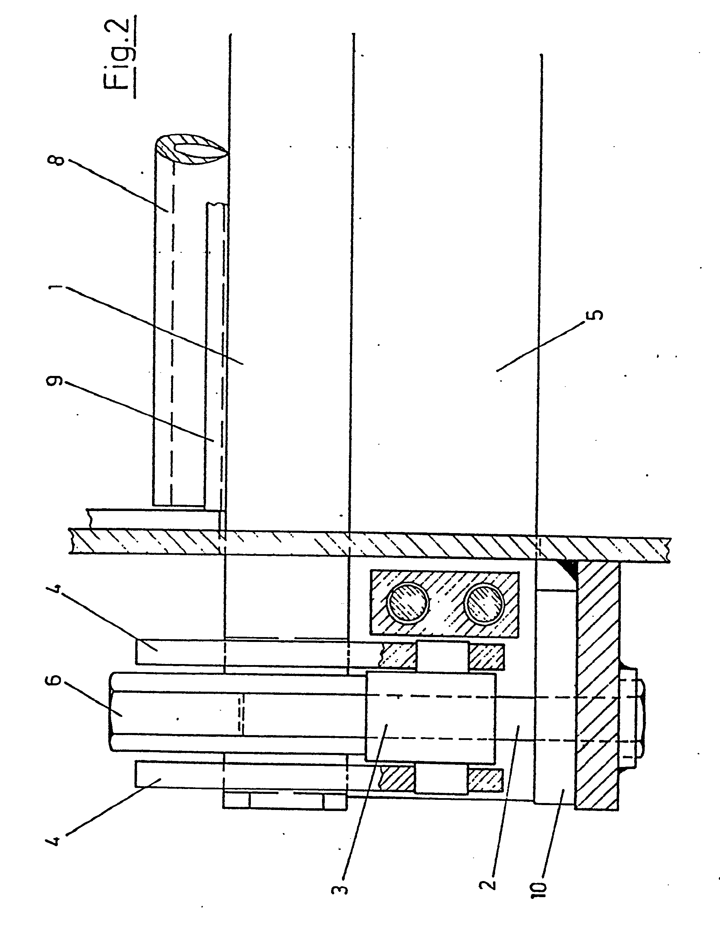

Figur 2 eine teilweise aufgeschnittene Ansicht von vorne auf eine Halterung für die Gegenschneide.

In den Figuren ist mit 1 eine Gegenschneide bezeichnet, die mit dem Flugkreis 11 für die Schneidmesser einer nicht dargestellten Trommelrosette derart zusammenwirkt, daß das durch eine Zufuhrwalze 8 und einen Abstreifer 9 der Häckselanordnung zugeführte Futter gehäckselt werden kann. Um den Schneidspalt zwischen der Gegenschneide 1 und dem Flugkreis 11 der Schneidmesser je nach Bedarf nachstellen zu können, muß die Gegenschneide 1 eine im wesentlichen horizontale Verschiebung durchführen können.

Die Gegenschneide 1 ist zu diesem Zweck gemäß der Erfindung auf einen mit dem Gestell über einen Träger 10 fest verbundenen Amboß 5 gelagert und zwar auf dessen waagrechter oberer Begrenzungsfläche. An beiden Enden der Gegenschneide 1 sind im wesentlichen U-förmige Spannbügel 4 vorgesehen, die sowohl die Gegenschneide 1 als auch den Amboß 5 umgeben und mit einem Träger 10 des Maschinengehäuses derart fest verbunden sind, daß die Gegenschneide 1 auf den Amboß 5 gepreßt wird. Die beiden Schenkel des Spannbügels 4 sind an ihren unteren Enden durch Gelenkstücke 3 verlängert, wobei die Innenseiten der Gelenkstücke 3 konvex ausgestaltet sind und spielfrei mit einer Stelle 7 am Amboß anliegen. Jeder Schenkel des Spannbügels 4 sowie die zugehörigen Gelenkstücke 3 werden von Spannschrauben 2 durchsetzt, die von unten in die Schenkel und die Gelenkstücke eingesetzt werden und diese mittig durchsetzen. In entsprechende Öffnungen sind von oben Spannmuttern 6 in die Schenkel des Spannbügels 4 eingesetzt, die mit den Spannschrauben 2 dahingehend zusammenwirken, daß die Gegenschneide 1 auf den Amboß 5 gepreßt wird. Die Schenkel des Spannbügels 4 bestimmen dabei die Lage der Gegenschneide 1 auf dem Amboß.

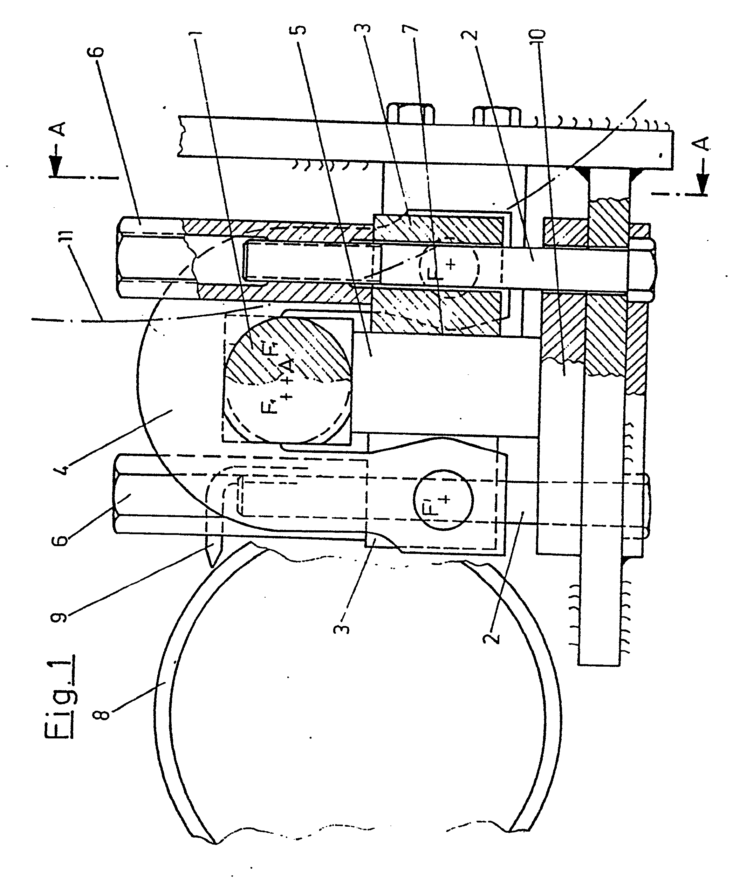

Durch unterschiedliches Anziehen der Spannschrauben 2 und der Spannmuttern 6 stellen sich die Schenkel des Spannbügels 4 schräg und verschieben dadurch die Gegenschneide, wobei ein senkrechtes Anheben des in Figur 1 gezeigten rechten Schenkels des Spannbügels 4 in Richtung des Pfeiles F ein Verschieben der Gegenschneide 1 bewirkt in Richtung des Pfeiles $F_1$, wobei gleichzeitig der in Figur 1 links eingezeichnete Schenkel des Spannbügels 4 etwas nach unten bewegt wird. Umgekehrt bewirkt ein Anheben des in Figur 1 links eingezeichneten Schenkels des Spannbügels 4 in Richtung des Pfeiles F' nach oben ein entgegengesetztes Verschieben der Gegenschneide 1 in Richtung des Pfeiles $F'_1$, so daß also der Spalt zwischen Gegenschneide 1 und Flugkreis 11 der Schneidmesser feinfühlig, schnell und ohne großen Aufwand einstellbar ist.

Mit der erfindungsgemäßen Häckselanordnung wird also die Einstellung des Gegenmessers gegenüber den bekannten Anordnungen wesentlich erleichtert, da ein einfaches Betätigen der Spannschrauben bzw. Spannmuttern mit einem verlängerten Steckschlüssel mit einem einmaligen Arbeitsvorgang eine genaue Justierung des Schneidspaltes ermöglicht.

**Patentansprüche**

1. Häckselanordnung für Häckselmaschinen, insbesondere Trommelhäcksler mit einer Häckseltrommel, die an ihrem Umfang mehrere im Abstand voneinander angeordnete Schneidmesser aufweist, die an mindestens einer rotierenden Trommelrosette befestigt sind und die mit einer in ihrer Lage einstellbaren langgestreckten Gegenschneide (1) zusammenwirken, die an ihren beiden Enden jeweils auf einem feststehenden Amboß (5) aufliegt und von einem im wesentlichen U-förmigen Bügel umgeben ist, dadurch gekennzeichnet, daß jeder Bügel als Spannbügel (4) ausgebildet ist, der die Gegenschneide (1) unter der Einwirkung von jeden seiner Schenkel durchsetzenden mit Spannmuttern (6) zusammenwirkenden Spannschrauben (2) gegen die waagrechte Oberfläche des Amboß (5) drückt, daß die beiden Schenkel des Spannbügels (4) durch Gelenkstücke (3) mit parallel zur Längsrichtung der Gegenschneide (1) ausgerichteten Schwenkachsen verlängert sind und daß die dem Amboß (5) zugewandten Innenseiten der Gelenkstücke (3) konvex sind und an den Seitenwänden des Amboß (5) nur an einer Stelle (7) anliegen, so daß durch vertikales Verschieben (F, F') nur eines Schenkels des Spannbügels (4) ein entsprechendes im wesentlichen horizontales Verschieben (F₁, F'₁) der Gegenschneide erfolgt.

2. Häckselanordnung nach Anspruch 1, dadurch gekennzeichnet, daß die Spannschrauben (2) von unten mittig in das Gelenkstück jedes der beiden Schenkel jedes Spannbügels (4) eingesetzt sind und daß die Spannmuttern (6) mittig von oben eingesetzt sind und so weit nach oben verlängert sind, daß sie durch einen Steckschlüssel von oben zugänglich sind.

## Claims

1. A chopping assembly for chopping machines, in particular drum choppers with a chopping drum having along its periphery a plurality of spaced cutting blades attached to at least one rotating drum anchor Plate and cooperating with an elongated counterblade (1) of adjustable position which lies at each end against a stationary anvil (5) and is surrounded by a substantially U-shaped bar, characterized in that each bar is designed as a tension bar (4) which presses the counterblade (1) against the horizontal surface of the anvil (5) under the effect of tension screws (2) penetrating each arm of said bar and cooperating with tension nuts (6), in that the two arms of the tension bar (4) are prolonged by articulation pieces (3) with swivelling axes aligned parallel to the longitudinal direction of the counterblade (1), and in that the insides of the articulation pieces (3) facing the anvil (5) are convex and lie against the side walls of the anvil (5) at only one place (7) so that vertical displacement (F, F') of only one arm of the tension bar (4) causes corresponding substantially horizontal displacement (F₁, F'₁) of the counterblade (1).

2. The chopping assembly according to claim 1, characterized in that the tension screws (2) are inserted from below into the middle of the articulation piece of each of the two arms of each tension bar (4) and in that the tension nuts (6) are inserted from above in the middle and prolonged upwardly to such an extent that they are accessible from above by means of a socket wrench.

## Revendications

1. Dispositif de hachage pour machine à hacher, en particulier hacheur à tambour comportant un tambour de hachage qui présente sur sa périphérie un pluralité de lames de couteaux espacées les unes des autres et fixées sur au moins un flasque de tambour rotatif, les lames de couteaux coopérant avec une contre-lame (1) allongée, réglable en position, chacune des deux extrémités de la contre-lame reposant sur un tasseau monté fixe, et étant entourée par un étrier sensiblement en forme de U, caractérisé en ce que chaque étrier est formé d'un étrier de serrage (4) pressant la contre-lame (1) contre la face supérieure horizontale du tasseau (5), sous l'action de vis de serrage (2) traversant chacune des jambes de l'étrier et coopérant avec des écrous (6) associés, en ce que les deux jambes de l'étrier (4) sont prolongées par des pièes articulées (3) comportant des axes d'articulation disposés parallèlement à la direction longitudinale de la contre-lame (1), et en ce que les côtés intérieurs des pièces articulées, tournés vers le tasseau (5), sont convexes et reposent en un seul endroit (7) contre les parois latérales du tasseau (5), de sorte qu'un déplacement vertical (F, F') d'une seule jambe de l'étrier de serrage (4), entraîne un déplacement sensiblement horizontal (F₁, F₁) correspondant de la contre-lame (1).

2. Dispositif de hachage selon la revendication 1, caractérisé en ce que les vis de serrage (2) pénètrent par en dessous et au milieu, dans la pièce articulée de chacune des deux jambes de chaque étrier de serrage (4) et en ce que les écrous de serrage (6) sont introduits par le dessus et au milieu et sont prolongés vers le haut d'une longueur telle qu'ils sont accessibles du dessus, au moyen d'une clé à tube.

Fig. 1

0 129 649

Fig.2